# EUROPEAN PATENT SPECIFICATION

(11) **EP 4 404 330 B1**
(45) Date of publication and mention of the grant of the patent: **15.10.2025**
(21) Application number: 23216880.7
(22) Date of filing: 14.12.2023
(51) Int. Cl.: H01M 10/48, H01M 10/613, H01M 50/209, H01M 50/367, H01M 50/507

(54) **RECHARGEABLE BATTERY MODULE**
WIEDERAUFLADBARES BATTERIEMODUL
MODULE DE BATTERIE RECHARGEABLE

(30) Priority: 16.01.2023 KR 20230006357
(43) Date of publication of application: 24.07.2024
(73) Proprietor: Samsung SDI Co., Ltd., Yongin-si, Gyeonggi-do 17084 (KR)
(72) Inventor: KIM, Hyun, 17084 Yongin-si (KR); KIM, Bohoon, 17084 Yongin-si (KR)
(74) Representative: Marks & Clerk LLP

(56) References cited:
- EP-A1- 2 849 252
- EP-A1- 3 321 994
- CN-U- 218 182 435

## Description

### BACKGROUND

### 1. Field

The present invention relates to a rechargeable battery module.

### 2. Description of the Related Art

A rechargeable battery is a battery repeatedly charged and discharged, unlike a primary battery. A small-capacity secondary battery may be used in a portable electronic device, such as a mobile phone, a laptop computer, and a camcorder.

A large-capacity and high-density secondary battery may be used for a power source or energy storage, such as for driving a motor of a hybrid vehicle and an electric vehicle. To drive a motor of a hybrid vehicle that requires a relatively high energy density, for example, the rechargeable battery may be used as a rechargeable battery module including a plurality of battery cells coupled in series and/or in parallel.

For example, the rechargeable battery module includes a plurality of battery cells and a temperature sensor attached to a central portion of the module. The temperature sensor detects the temperature of the battery cell. That is, the temperature sensor may measure the temperature of the battery cell by heat conduction transmitted through a short aluminium plate in contact with the body of the battery cell.

Under normal operating conditions, since a temperature deviation between the battery cells is not large, even if it is assumed that the temperature of one battery cell is the same as that of the entire battery cells, there may not be a problem. However, when a fire event such as thermal runaway occurs, a large deviation may occur between the battery cells due to a rapid temperature increase.

As an example, when the temperature sensor is installed in the central portion of the module, if the thermal runaway occurs in an edge battery cell, after the heat transferring between the battery cells with high heat capacity from the edge to the central portion, the temperature sensor detects the temperature. Therefore, there is a time delay from the fire occurrence to the detection. However, attaching the temperature sensor to each battery cell is not desirable in terms of cost and maintenance.

### SUMMARY

According to an aspect of embodiments of the present disclosure, a rechargeable battery module that senses a temperature of a battery cell and a temperature of a vent gas is provided. According to another aspect of embodiments of the present disclosure, a rechargeable battery module is provided that secures a long (*i.e*. more) time to respond to a fire by detecting a temperature of a battery cell in daily operating situations with a single temperature sensor and detecting a temperature of a vent gas when thermal runaway and events occur.

According to one or more embodiments, a rechargeable battery module includes a plurality of battery cells stacked in a first direction; a bus bar holder including a bottom part covering the battery cells along a second direction crossing the first direction and exposing electrode terminals of the battery cells in a third direction crossing the first and second directions; a bus bar connecting the electrode terminals exposed by an exposure hole of the bus bar holder; and a temperature sensor arranged on an electrode terminal of the electrode terminals to detect a temperature of a battery cell of the battery cells, the temperature sensor including a first sensing part to transmit a detection signal through a body part connected to the first sensing part, the bus bar holder further including a vent pipe part connected to the bottom part in the second direction to define a vent passage toward a vent of the battery cells along the first direction, and the temperature sensor further including a second sensing part connected to the body part, extending through the vent pipe part, and exposed to the vent passage.

In one or more embodiments, the second sensing part may be connected to the first sensing part.

In one or more embodiments, the first sensing part may be formed of a plate having a first width corresponding to a width of the electrode terminal and a first length, and the second sensing part may be formed of a plate having a second width smaller than the first width and a length longer than the first length and exposed in a second length extending to the vent passage in the second direction.

In one or more embodiments, the second sensing part may be in contact with a flow of a vent gas with a thickness (t) in a direction that intersects the second direction and an outer surface area of the second width and the second length.

In one or more embodiments, the second sensing part may be in contact with the flow of the vent gas in a horizontally downward state to the vent with a first area (W2*L2) of the second width and the second length, and may be in contact with the flow of the vent gas in a vertical state to the vent with a second area (t*L2) that is smaller than the first area and having the thickness (t) and the second length (L2).

In one or more embodiments, the rechargeable battery module may further include a pair of end plates respectively arranged at opposite ends of the plurality of battery cells in the first direction; and a pair of side plates respectively arranged at opposite sides of the plurality of battery cells in the second direction to connect the pair of end plates to each other, wherein the bottom part of the bus bar holder is fixed to the pair of end plates and the pair of side plates.

In one or more embodiments, the second sensing part may be in contact with the flow of the vent gas with a first area (W2*L2) of a second width and a second length in a first angle downwardly inclined while going in the first direction with respect to the vent, and may be in contact with the flow of the vent gas in a first angle that slopes upward with respect to a vertical direction of the vent with a second area (t*L2) that is smaller than the first area and having the thickness (t) and the second length (L2).

In one or more embodiments, the second sensing part may be in contact with the flow of the vent gas in a second angle that slopes upward while going in the first direction with respect to the vent with a first area (W2*L2) of a second width and a second length, and in contact with the flow of the vent gas in a first angle that slopes downward with respect to a vertical direction of the vent with a second area (t*L2) that is smaller than the first area and having a thickness (t) and a second length (L2).

In one or more embodiments, the second sensing part may be in contact with the flow of the vent gas in a vertical state to the vent with a first area (W2*L2) of the second width and the second length, and in contact with the flow of vent gas in a horizontal state to the vent with a second area (t*L2) that is smaller than the first area and having a thickness (t) and a second length (L2).

In one or more embodiments, the second sensing part may include flow holes to distribute a vent gas to the vent in a horizontal state.

According to an aspect of one or more embodiments, in the rechargeable battery module, since the first sensing part of the temperature sensor is connected to the battery cell and the second sensing part is installed in the vent pipe part to be exposed to the vent passage, when a thermal runaway and/or an event occur, the temperature of the vent gas may be effectively sensed by contacting the vent gas with the second sensing part. Therefore, it is possible to secure a long time to respond to the fire, and the safety of the rechargeable battery module is improved.

At least some of the above and other features of the invention are set out in the claims.

### BRIEF DESCRIPTION OF THE DRAWINGS

FIG. 1 is a perspective view of a rechargeable battery module according to an embodiment of the present invention.
FIG. 2 is an exploded perspective view of the rechargeable battery module of FIG. 1.
FIG. 3 is a perspective view of a temperature sensor of the rechargeable battery module of FIG. 1, according to an embodiment.
FIG. 4 is a cross-sectional view taken along the line IV-IV of FIG. 1.
FIG. 5 is a cross-sectional view of a vent flow path and a second sensing part taken along the line V-V of FIG. 1.
FIG. 6 is a temperature graph comparing comparative examples and an embodiment of the present invention.
FIG. 7 is a perspective view of a vent flow path and a second sensing part in a rechargeable battery module according to another embodiment of the present invention.
FIG. 8 is a cross-sectional view taken along the line VIII-VIII of FIG. 7.
FIG. 9 is a cross-sectional view of a vent flow path and a second sensing part in a rechargeable battery module according to another embodiment of the present invention.
FIG. 10 is a cross-sectional view of a vent flow path and a second sensing part in a rechargeable battery module according to another embodiment of the present invention.

### DESCRIPTION OF SYMBOLS

| | | | |
|---|---|---|---|
| 10: | battery cell | 11, 12: | electrode terminal |
| 13: | vents | 20: | bus bar holder |
| 21: | bottom part | 22: | vent pipe part |
| 23: | vent passage | 40: | bus bar |
| 50: | temperature sensor | 51: | first sensing part |
| 52: | second sensing part | 53: | body part |
| 60: | end plate | 70: | side plate |
| 211: | exposure hole | 221, 222: | side wall |
| 223: | ceiling | 250: | temperature sensor |
| 252: | second sensing part | 350: | temperature sensor |
| 352: | second sensing part | 450: | temperature sensor |
| 452: | second sensing part | 453: | flow hole |
| A1: | first area | A2: | second area |
| L1: | first length | L2: | second length |
| Q1: | flow rate | Q2: | flow rate |
| t: | thickness | W1: | first width |
| W2: | second width | θ1, θ2: | first, second angle |

### DETAILED DESCRIPTION

The present invention will be described more fully herein with reference to the accompanying drawings, in which some embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

In addition, unless explicitly described to the contrary, the word "comprise" and variations such as "comprises" or "comprising" are to be understood to imply the inclusion of stated elements but not the exclusion of any other elements.

Also, in this specification, it is to be understood that when a component is referred to as being "connected" or "coupled" to another component, it may be connected or coupled directly to the other component or connected or coupled to the other component with one or more other components intervening or interposed therebetween.

Singular forms are to include plural forms unless the context clearly indicates otherwise.

It is to be understood that, although the terms "first," "second," etc. may be used herein to describe various elements, these elements should not be limited by these terms. These terms are used to distinguish one element from another. For example, a first element could be termed a "second" element, and, similarly, a second element could be termed a "first" element, without departing from the scope of example embodiments of the inventive concept. The terms of a singular form may include plural forms unless the context clearly indicates otherwise.

In addition, terms such as "below," "lower," "above," "upper," and the like are used to describe the relationship of the configurations shown in the drawings. However, the terms are used as a relative concept and are described with reference to the direction indicated in the drawings, and are not intended to be limiting.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

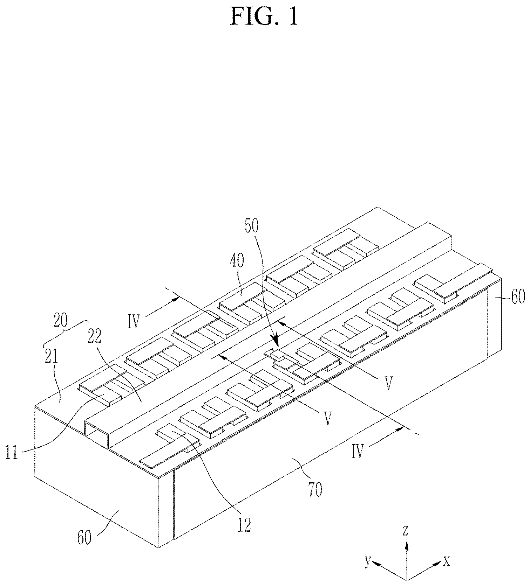

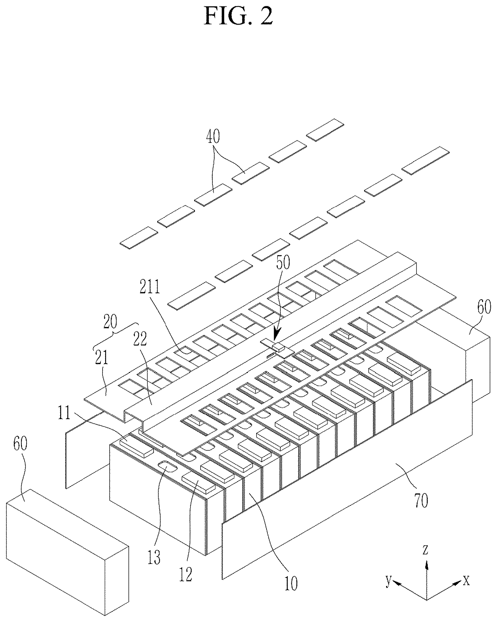

FIG. 1 is a perspective view of a rechargeable battery module according to an embodiment of the present invention; and FIG. 2 is an exploded perspective view of the rechargeable battery module of FIG. 1. Referring to FIG. 1 and FIG. 2, a rechargeable battery module according to an embodiment includes a plurality of battery cells 10, a bus bar holder 20, a bus bar 40, and a temperature sensor 50. In an embodiment, the rechargeable battery module further includes a pair of end plates 60 and a pair of side plates 70.

The plurality of battery cells 10 are stacked in a first direction (e.g., an x-axis direction). A pair of end plates 60 are disposed at both ends of the first direction of the stacked battery cells 10 to set the flow and arrangement of the battery cells 10 in the first direction (e.g., the x-axis direction).

A pair of side plates 70 are disposed at both sides of a second direction (e.g., a y-axis direction) of the battery cells 10 crossing the first direction, and are connected to the pair of end plates 60 to set the flow and arrangement of the of battery cells 10 in the second direction.

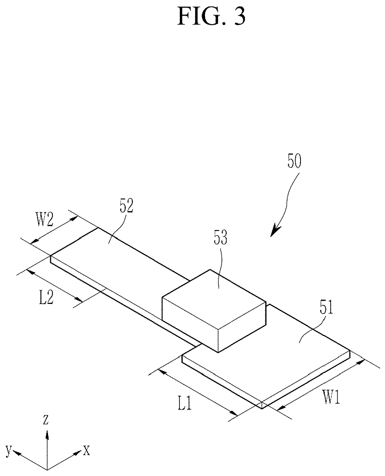

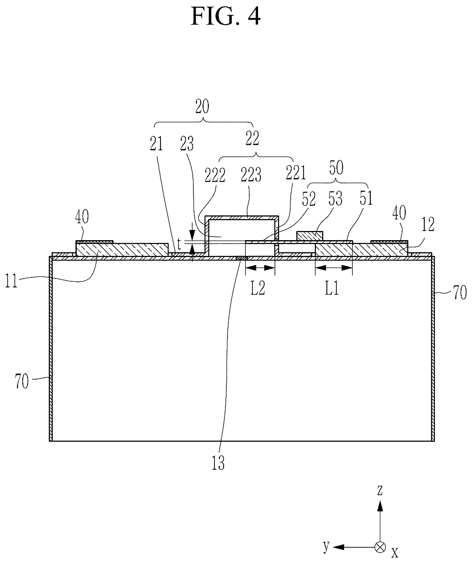

FIG. 3 is a perspective view of a temperature sensor applied to the rechargeable battery module of FIG. 1 and FIG. 2. FIG. 4 is a cross-sectional view taken along the line IV-IV of FIG. 1. Referring to FIG. 1 to FIG. 4, the bus bar holder 20 includes a bottom part 21 for connection and insulation of electrode terminals 11 and 12, and a vent pipe part 22 for a discharge of a vent gas.

As an example, the bottom part 21 is provided at both sides of the second direction, and the vent pipe part 22 is provided at the center of the second direction and connected to the bottom part 21 at both sides. The bottom part 21 covers the battery cells 10 while exposing the electrode terminals 11 and 12 of the battery cells 10 in a third direction (e.g., a z-axis direction) crossing the second direction on both sides of the second direction (e.g., the y-axis direction) crossing the first direction. The bottom part 21 has an exposure hole 211 in a part corresponding to the electrode terminals 11 and 12. Also, the bottom part 21 is fixed to the pair of end plates 60 and the pair of side plates 70.

The vent pipe part 22 forms a vent passage 23 towards vents 13 of the battery cells 10. In an embodiment, the vent passage 23 is connected to the bottom part 21 in the second direction and is formed in an entire range of the rechargeable battery module along the first direction.

As an example, the vent pipe part 22 has a pair of side walls 221 and 222 at both sides in the second direction and a ceiling 223 connecting upper ends of the pair of side walls 221 and 222. Therefore, in an embodiment, the vent passage 23 is an approximately rectangular passage defined by the pair of side walls 221 and 222 and the ceiling 223 of the vent pipe part 22 and surfaces around the vent 13 of the battery cells 10.

The bus bar 40 electrically and mechanically connects the electrode terminals 11 and 12 exposed in the third direction through the exposure hole 211. That is, the bus bar 40 may connect the electrode terminals 11 and 12 of the battery cells 10 neighboring in the first direction in parallel or in series by welding, for example.

The temperature sensor 50 is installed on the electrode terminals 11 and 12 of a battery cell 10 among the plurality of battery cells 10, and includes a first sensing part 51 and a second sensing part 52. The temperature sensor 50 is configured to detect a temperature of a battery cell 10 with the first sensing part 51 and transmit a detection signal to a battery management system (not shown) through a body part 53 connected to the first sensing part 51. The first and second sensing parts 51 and 52 may be connected to each other.

The second sensing part 52 is connected to the body part 53, installed through the vent pipe part 22, exposed to the vent passage 23, and senses the temperature of the vent gas flowing through the vent passage 23. The first sensing part 51 senses the temperature of the battery cell 10 during a normal operation of the module.

The second sensing part 52 senses the temperature of the vent gas when the vent gas of high temperature flows through the vent passage 23 in event conditions, such as a thermal runaway. During the normal operation of the module, the second sensing part 52 prepares for event conditions.

In an embodiment, the first sensing part 51 is formed of a plate having a first width W1 and a first length L1 corresponding to widths of the electrode terminals 11 and 12, and the second sensing part 52 is formed of a plate having a second width W2 smaller than the first width W1 and a length longer than the first length L1.

The second sensing part 52 has a second length L2 extending inside the vent passage 23 in the second direction. The second sensing part 52 contacts the flow of the vent gas with a thickness t in the direction crossing the second direction (e.g., the y-axis direction) and an outer surface area of the second width W2 and the second length L2.

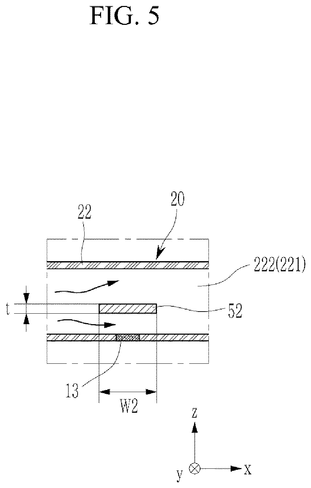

FIG. 5 is a cross-sectional view of a vent flow path and a second sensing part taken along the line V-V of FIG. 1. Referring to FIG. 4 and FIG. 5, in an embodiment, the temperature sensor 50 may be formed of a negative temperature coefficient thermistor.

The second sensing part 52 is inserted and installed into the side wall 221, contacts a flow of the vent gas in a horizontal downward state to the vent 13 with a first area (A1 = W2*L2) of the second width W2 and the second length L2, and contacts a flow of the vent gas in a vertical state to the vent 13 with a second area (A2 = t*L2) smaller than the first area and having the thickness t and the second length L2.

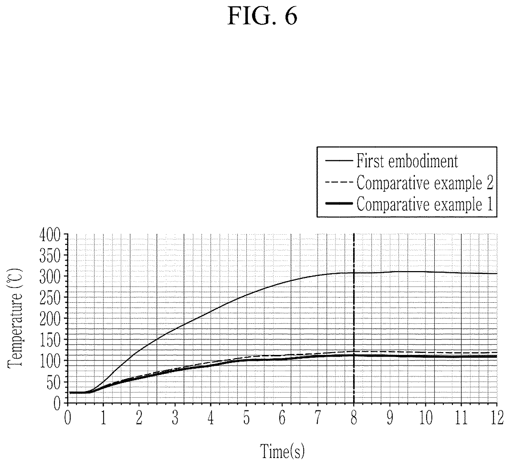

FIG. 6 is a temperature graph comparing comparative examples and an embodiment (a first embodiment) of the present invention. The temperature graph represents an average temperature for a vent passage volume. A comparative example 1 senses a temperature around a side wall of a vent pipe part during a cell event through a temperature sensor having only a first sensing part.

In a comparative example 2, a through-hole (not shown) is provided in a side wall of a vent pipe part, and a temperature is sensed around the through-hole of the side wall during a cell event through a temperature sensor having only a first sensing part. Both comparative examples 1 and 2 did not detect a large temperature increase even during the cell event.

In contrast, in the first embodiment, since the second sensing part 52 penetrates the side wall 221 of the vent pipe part 22 to be inserted and installed into the vent passage 23 and the second sensing part 52 is in direct contact with the vent gas, a large temperature increase was detected during the cell event through the temperature sensor 50.

It may be confirmed that the first embodiment may detect the large temperature increase during the cell event compared to the comparative examples 1 and 2. In the comparative examples 1 and 2, maximum detected temperatures are 110 and 120 degrees Celsius. According to the first embodiment, the maximum detected temperature is shown to be a significantly higher, as 310 degrees Celsius, compared to the comparative examples 1 and 2.

Therefore, compared to the comparative examples 1 and 2, the first embodiment may quickly sense the event situation at the beginning of the cell event. Therefore, the first embodiment may secure a long time capable of responding to a fire. As such, the safety of the rechargeable battery module is improved.

Herein, various embodiments of the present invention will be described. The description of a same configuration may be omitted, and different configurations are compared with those of the above-described embodiment and another embodiment.

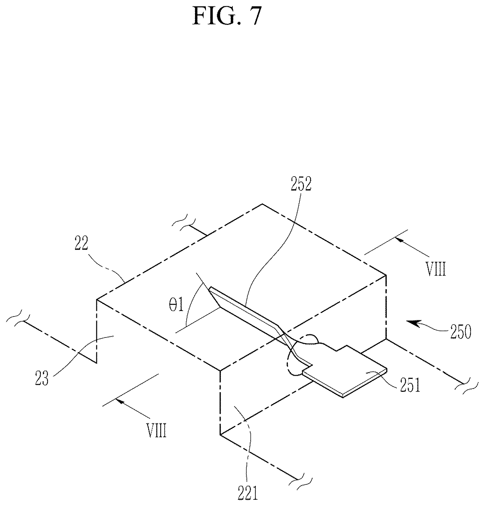

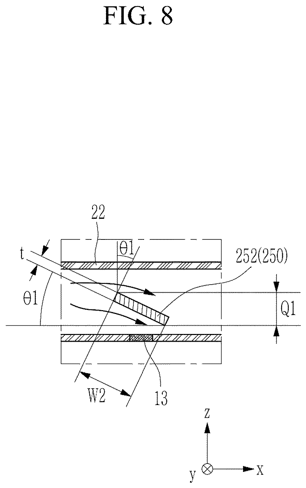

FIG. 7 is a perspective view of a vent flow path and a second sensing part in a rechargeable battery module according to another embodiment of the present invention; and FIG. 8 is a cross-sectional view taken along the line VIII-VIII of FIG. 7. As an example, a second sensing part 252 may be inserted and installed into the side wall 221 of the vent pipe part 22 in a twisted state with a first angle θ1 outside the vent passage 23.

Referring to FIG. 7 and FIG. 8, in a temperature sensor 250 of an embodiment, the second sensing part 252 is in contact with a flow of vent gas with a first angle θ1, which slopes downward while progressing in the first direction (e.g., the x-axis direction) with respect to the vent 13 in the first area (A1 = W2*L2) of the second width W2 and the second length L2.

In addition, the second sensing part 252 is in contact with the flow of the vent gas with the second area (A2 = t*L2) smaller than the first area and having the thickness t and the second length L2 with the first angle θ1 inclined upward with respect to the vertical direction (e.g., the z-axis direction) of the vent 13.

Since the first area (A1 = W2*L2) is larger (e.g., much larger) than the second area (A2 = t*L2), the temperature detection is mainly performed in the first area (A1 = W2*L2). As the first angle θ1 is formed larger in a range that does not interfere with the flow resistance of the vent gas, a flow rate Q1 of the contacted vent gas may be increased.

By the first area (A1 = W2*L2) inclined at the first angle θ1, the second sensing part 252 increases the flow rate Q1 of the contacted vent gas while lowering the flow of the vent gas. Therefore, the embodiment may more quickly sense the event situation at the beginning of the cell event compared to the previously described embodiment.

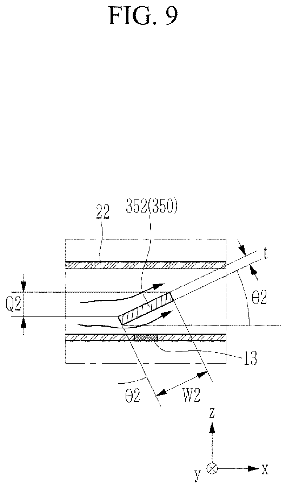

FIG. 9 is a cross-sectional view of a vent flow path and a second sensing part in a rechargeable battery module according to another embodiment of the present invention. Referring to FIG. 9, in a temperature sensor 350 of an embodiment, a second sensing part 352 is in contact with a flow of the vent gas in a second angle θ2, which slopes upward while going in the first direction (e.g., the x-axis direction) with respect to the vent 13 with the first area (A1 = W2*L2) of the second width W2 and the second length L2.

In addition, the second sensing part 352 is in contact with the flow of the vent gas with a second area (A2 = t*L2) smaller than the first area and having the thickness t and the second length L2 with the second angle θ2 inclined downward with respect to the vertical direction (e.g., the z-axis direction) of the vent 13.

Since the first area (A1 = W2*L2) is larger (e.g., much larger than the second area (A2 = t*L2), the temperature detection is mainly performed in the first area (A1 = W2*L2). As the second angle θ2 is formed larger in a range that does not interfere with the flow resistance of the vent gas, a flow rate Q2 of the contact vent gas may be increased.

By the first area (A1 = W2*L2) inclined at the second angle θ2, the second sensing part 352 increases the flow rate Q2 of the contacted vent gas while increasing the flow of the vent gas. Therefore, the embodiment may more quickly sense the event situation at the beginning of the cell event compared to the first described embodiment.

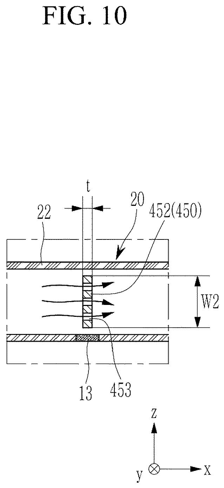

FIG. 10 is a cross-sectional view of a vent flow path and a second sensing part in a rechargeable battery module according to another embodiment of the present invention. Referring to FIG. 10, in a temperature sensor 450 of an embodiment, a second sensing part 452 is in contact with a flow of the vent gas in a vertical state with respect to the vent 13 with the first area (A1 = W2*L2) of the second width W2 and the second length L2.

In addition, the second sensing part 452 is in contact with the flow of the vent gas in the horizontal direction of the vent 13 with a second area (A2 = t*L2) smaller than the first area and having the thickness t and the second length L2.

The second sensing part 452 includes flow holes 453 through which the vent gas is distributed to the vent 13 in the horizontal state. The flow holes 453 are in contact the flow of the vent gas while circulating the vent gas.

Since the second sensing part 452 is disposed in the vertical state and the vent 13 is provided with the flow holes 453 in the horizontal state, temperature sensing is mainly performed through the first area (A1 = W2*L2) and the flow holes 453. In an embodiment, the vertical state of the second sensing part 452 increases (e.g., maximally increases) the flow rate of the vent gas in contact while applying the flow resistance to the vent gas, and the flow holes 453 circulate the vent gas to minimize or reduce an increase in the flow resistance. The flow rate of the contacted vent gas is defined or set as an area obtained by subtracting the area sum of the flow holes 453 from the first area (A1 = W2*L2).

By the vertical first area (A1 = W2*L2) and the flow holes 453, the second sensing part 452 maximizes or increases the flow rate of the contacted vent gas while circulating the flow of the vent gas. Therefore, the embodiment may more quickly sense the event situation at the beginning of the cell event compared to the first described embodiment.

While the present invention has been described in connection with what are presently considered to be some practical example embodiments, it is to be understood that the invention is not limited to the disclosed embodiments. On the contrary, it is intended to cover various modifications and equivalent arrangements included within the scope of the appended claims.

## Claims

1. A rechargeable battery module comprising:
a plurality of battery cells stacked in a first direction;
a bus bar holder comprising a bottom part covering the battery cells along a second direction crossing the first direction and exposing electrode terminals of the battery cells in a third direction crossing the first and second directions;
a bus bar connecting the electrode terminals exposed by an exposure hole of the bus bar holder; and
a temperature sensor arranged on an electrode terminal of the electrode terminals to detect a temperature of a battery cell of the battery cells, the temperature sensor comprising a first sensing part to transmit a detection signal through a body part connected to the first sensing part,
wherein the bus bar holder further comprises a vent pipe part connected to the bottom part in the second direction to define a vent passage toward a vent of the battery cells along the first direction, and
the temperature sensor further comprises a second sensing part connected to the body part, extending through the vent pipe part, and exposed to the vent passage.

2. The rechargeable battery module as claimed in claim 1, wherein the second sensing part is connected to the first sensing part.

3. The rechargeable battery module as claimed in claim 1 or claim 2, wherein
the first sensing part is formed of a plate having a first width corresponding to a width of the electrode terminal and a first length, and
the second sensing part is formed of a plate having a second width smaller than the first width and a length longer than the first length and exposed in a second length extending to the vent passage in the second direction.

4. The rechargeable battery module as claimed in claim 3, wherein the second sensing part is configured to be in contact with a flow of a vent gas with a thickness in a direction that intersects the second direction and an outer surface area of the second width and the second length.

5. The rechargeable battery module as claimed in claim 4, wherein the second sensing part is configured to be in contact with the flow of the vent gas in a horizontally downward state to the vent with a first area defined by the second width and the second length, and is contact with the flow of the vent gas in a vertical state to the vent with a second area defined by the thickness and the second length, the second area being smaller than the first area.

6. The rechargeable battery module as claimed in claim 4, wherein the second sensing part contacts the flow of the vent gas with a first area defined by the second width and the second length in a first angle downwardly inclined while going in the first direction with respect to the vent, and contacts the flow of the vent gas in a first angle that slopes upward with respect to a vertical direction of the vent with a second area defined by the thickness and the second length, the second area being smaller than the first area.

7. The rechargeable battery module as claimed in claim 4, wherein the second sensing part contacts the flow of the vent gas in a second angle that slopes upward while going in the first direction with respect to the vent with a first area defined by the second width and the second length, and contacts the flow of the vent gas in a first angle that slopes downward with respect to a vertical direction of the vent with a second area defined by the thickness and the second length, the second area being smaller than the first area.

8. The rechargeable battery module as claimed in claim 4, wherein the second sensing part contacts the flow of the vent gas in a vertical state to the vent with a first area defined by the second width and the second length, and contacts the flow of the vent gas in a horizontal state to the vent with a second area defined by the thickness and the second length, the second area being smaller than the first area.

9. The rechargeable battery module as claimed in claim 8, wherein the second sensing part comprises flow holes to distribute a vent gas to the vent in a horizontal state.

10. The rechargeable battery module as claimed in any one of claims 1 to 9, further comprising:
a pair of end plates respectively arranged at opposite ends of the plurality of battery cells in the first direction; and
a pair of side plates respectively arranged at opposite sides of the plurality of battery cells in the second direction to connect the pair of end plates to each other,
wherein the bottom part of the bus bar holder is fixed to the pair of end plates and the pair of side plates.

## Patentansprüche

1. Aufladbares Batteriemodul, umfassend:
eine Vielzahl von Batteriezellen, die in einer ersten Richtung gestapelt sind;
einen Sammelschienenhalter, der ein unteres Teil umfasst, das die Batteriezellen entlang einer zweiten Richtung, welche die erste Richtung kreuzt, abdeckt und Elektrodenanschlüsse der Batteriezellen in einer dritten Richtung, welche die erste und die zweite Richtung kreuzt, freilegt;
eine Sammelschiene, die die Elektrodenanschlüsse verbindet, die durch ein Freilegungsloch des Sammelschienenhalters freigelegt sind; und
einen Temperatursensor, der an einem Elektrodenanschluss der Elektrodenanschlüsse angeordnet ist, um eine Temperatur einer Batteriezelle der Batteriezellen zu detektieren, wobei der Temperatursensor ein erstes Erfassungsteil umfasst, um ein Detektionssignal durch ein mit dem ersten Erfassungsteil verbundenes Gehäuseteil zu übertragen,
wobei der Sammelschienenhalter weiter ein Entlüftungsrohrteil umfasst, das mit dem unteren Teil in der zweiten Richtung verbunden ist, um einen Entlüftungsdurchgang in Richtung einer Entlüftung der Batteriezellen entlang der ersten Richtung zu definieren, und
der Temperatursensor weiter ein zweites Erfassungsteil umfasst, das mit dem Gehäuseteil verbunden ist, sich durch das Entlüftungsrohrteil hindurch erstreckt und zum Entlüftungsdurchgang frei liegt.

2. Aufladbares Batteriemodul nach Anspruch 1, wobei das zweite Erfassungsteil mit dem ersten Erfassungsteil verbunden ist.

3. Aufladbares Batteriemodul nach Anspruch 1 oder Anspruch 2, wobei
das erste Erfassungsteil aus einer Platte gebildet ist, die eine erste Breite, die einer Breite des Elektrodenanschlusses entspricht, und eine erste Länge aufweist, und
das zweite Erfassungsteil aus einer Platte gebildet ist, die eine zweite Breite, kleiner als die erste Breite, und eine Länge, länger als die erste Länge, aufweist und in einer zweiten Länge frei liegt, die sich in der zweiten Richtung zum Entlüftungsdurchgang erstreckt.

4. Aufladbares Batteriemodul nach Anspruch 3, wobei das zweite Erfassungsteil konfiguriert ist, um mit einem Entlüftungsgasfluss mit einer Dicke in einer Richtung, welche die zweite Richtung schneidet, und einem Außenoberflächenbereich der zweiten Breite und der zweiten Länge in Kontakt zu stehen.

5. Aufladbares Batteriemodul nach Anspruch 4, wobei das zweite Erfassungsteil konfiguriert ist, um mit dem Entlüftungsgasfluss in einem horizontal nach unten gerichteten Zustand zur Entlüftung mit einer ersten Fläche in Kontakt zu stehen, die durch die zweite Breite und die zweite Länge definiert ist, und mit dem Entlüftungsgasfluss in einem vertikalen Zustand zur Entlüftung mit einer zweiten Fläche in Kontakt steht, die durch die Dicke und die zweite Länge definiert ist, wobei die zweite Fläche kleiner als die erste Fläche ist.

6. Aufladbares Batteriemodul nach Anspruch 4, wobei das zweite Erfassungsteil den Entlüftungsgasfluss mit einer ersten Fläche, die durch die zweite Breite und die zweite Länge definiert ist, in einem ersten Winkel kontaktiert, der beim Verlaufen in die erste Richtung in Bezug auf die Entlüftung nach unten geneigt ist, und den Entlüftungsgasstrom in einem ersten Winkel, der in Bezug auf eine vertikale Richtung der Entlüftung schräg nach oben steht, mit einer zweiten Fläche kontaktiert, die durch die Dicke und die zweite Länge definiert ist, wobei die zweite Fläche kleiner als die erste Fläche ist.

7. Aufladbares Batteriemodul nach Anspruch 4, wobei das zweite Erfassungsteil den Entlüftungsgasfluss in einem zweiten Winkel, der beim Verlaufen in die erste Richtung in Bezug auf die Entlüftung nach oben steht, mit einer ersten Fläche kontaktiert, die durch die zweite Breite und die zweite Länge definiert ist, und den Entlüftungsgasfluss in einem ersten Winkel, der in Bezug auf eine vertikale Richtung der Entlüftung nach unten steht, mit einer zweiten Fläche kontaktiert, die durch die Dicke und die zweite Länge definiert ist, wobei die zweite Fläche kleiner als die erste Fläche ist.

8. Aufladbares Batteriemodul nach Anspruch 4, wobei das zweite Erfassungsteil den Entlüftungsgasfluss in einem vertikalen Zustand zur Entlüftung mit einer ersten Fläche kontaktiert, die durch die zweite Breite und die zweite Länge definiert ist, und den Entlüftungsgasfluss in einem horizontalen Zustand zur Entlüftung mit einer zweiten Fläche kontaktiert, die durch die Dicke und die zweite Länge definiert ist, wobei die zweite Fläche kleiner als die erste Fläche ist.

9. Aufladbares Batteriemodul nach Anspruch 8, wobei das zweite Erfassungsteil Flusslöcher umfasst, um ein Entlüftungsgas in einem horizontalen Zustand an die Entlüftung zu verteilen.

10. Aufladbares Batteriemodul nach einem der Ansprüche 1 bis 9, weiter umfassend:
ein Paar Endplatten, die jeweils an gegenüberliegenden Enden der Vielzahl von Batteriezellen in der ersten Richtung angeordnet sind; und
ein Paar Seitenplatten, die jeweils an gegenüberliegenden Seiten der Vielzahl von Batteriezellen in der zweiten Richtung angeordnet sind, um das Paar Endplatten miteinander zu verbinden,
wobei das untere Teil des Sammelschienenhalters an dem Paar Endplatten und dem Paar Seitenplatten fixiert ist.

## Revendications

1. Module de batterie rechargeable, comprenant :
une pluralité de cellules de batterie empilées dans une première direction ;
un support de barre omnibus comprenant une partie inférieure recouvrant les cellules de batterie le long d'une deuxième direction croisant la première direction et exposant des bornes d'électrode des cellules de batterie dans une troisième direction croisant les première et deuxième directions ;
une barre omnibus reliant les bornes d'électrode exposées par un trou d'exposition du support de barre omnibus ; et
un capteur de température agencé sur une borne d'électrode des bornes d'électrode pour détecter une température d'une cellule de batterie des cellules de batterie, le capteur de température comprenant une première partie de détection pour transmettre un signal de détection à travers une partie de corps raccordée à la première partie de détection,
dans lequel le support de barre omnibus comprend en outre une partie de tuyau d'aération connectée à la partie inférieure dans la deuxième direction pour définir un passage d'aération vers un évent des cellules de batterie le long de la première direction, et
le capteur de température comprend en outre une seconde partie de détection raccordée à la partie de corps, s'étendant à travers la partie de tuyau d'aération et exposée au passage d'aération.

2. Module de batterie rechargeable selon la revendication 1, dans lequel la seconde partie de détection est raccordée à la première partie de détection.

3. Module de batterie rechargeable selon la revendication 1 ou la revendication 2, dans lequel
la première partie de détection est formée d'une plaque présentant une première largeur correspondant à une largeur de la borne d'électrode et une première longueur, et
la seconde partie de détection est formée d'une plaque présentant une seconde largeur plus petite que la première largeur et une longueur plus longue que la première longueur et exposée dans une seconde longueur s'étendant jusqu'au passage d'aération dans la deuxième direction.

4. Module de batterie rechargeable selon la revendication 3, dans lequel la seconde partie de détection est configurée pour être en contact avec un écoulement d'un gaz d'évent avec une épaisseur dans une direction qui coupe la deuxième direction et une aire de surface externe de la seconde largeur et de la seconde longueur.

5. Module de batterie rechargeable selon la revendication 4, dans lequel la seconde partie de détection est configurée pour être en contact avec l'écoulement du gaz d'évent dans un état horizontalement vers le bas jusqu'à l'évent avec une première aire définie par la seconde largeur et la seconde longueur, et est en contact avec l'écoulement du gaz d'évent dans un état vertical jusqu'à l'évent avec une seconde aire définie par l'épaisseur et la seconde longueur, la seconde aire étant plus petite que la première aire.

6. Module de batterie rechargeable selon la revendication 4, dans lequel la seconde partie de détection entre en contact avec l'écoulement du gaz d'évent avec une première aire définie par la seconde largeur et la seconde longueur selon un premier angle incliné vers le bas tout en allant dans la première direction par rapport à l'évent, et entre en contact avec l'écoulement du gaz d'évent selon un premier angle qui s'incline vers le haut par rapport à une direction verticale de l'évent avec une seconde aire définie par l'épaisseur et la seconde longueur, la seconde aire étant plus petite que la première aire.

7. Module de batterie rechargeable selon la revendication 4, dans lequel la seconde partie de détection entre en contact avec l'écoulement du gaz d'évent selon un second angle qui s'incline vers le haut tout en allant dans la première direction par rapport à l'évent avec une première aire définie par la seconde largeur et la seconde longueur, et entre en contact avec l'écoulement du gaz d'évent selon un premier angle qui s'incline vers le bas par rapport à une direction verticale de l'évent avec une seconde aire définie par l'épaisseur et la seconde longueur, la seconde aire étant plus petite que la première aire.

8. Module de batterie rechargeable selon la revendication 4, dans lequel la seconde partie de détection entre en contact avec l'écoulement du gaz d'évent dans un état vertical jusqu'à l'évent avec une première aire définie par la seconde largeur et la seconde longueur, et entre en contact avec l'écoulement du gaz d'évent dans un état horizontal jusqu'à l'évent avec une seconde aire définie par l'épaisseur et la seconde longueur, la seconde aire étant plus petite que la première aire.

9. Module de batterie rechargeable selon la revendication 8, dans lequel la seconde partie de détection comprend des trous d'écoulement pour distribuer un gaz d'évent jusqu'à l'évent dans un état horizontal.

10. Module de batterie rechargeable selon l'une quelconque des revendications 1 à 9, comprenant en outre :
une paire de plaques d'extrémité agencées respectivement aux extrémités opposées de la pluralité de cellules de batterie dans la première direction ; et
une paire de plaques latérales agencées respectivement sur les côtés opposés de la pluralité de cellules de batterie dans la deuxième direction pour raccorder la paire de plaques d'extrémité l'une à l'autre,
dans lequel la partie inférieure du support de barre omnibus est fixée à la paire de plaques d'extrémité et à la paire de plaques latérales.
